# EUROPÄISCHE PATENTSCHRIFT

(11) **EP 0 821 877 B1**
(45) Veröffentlichungstag und Bekanntmachung des Hinweises auf die Patenterteilung: **15.09.2010**
(21) Anmeldenummer: 97111815.3
(22) Anmeldetag: 11.07.1997
(51) Int. Cl.: A21D 8/04

(54) **Verfahren zur Verwertung von Backwaren, insbesondere von Rest- und Rückbrot**
Process for recycling bakery products, more specially rests of bread and bread remainders
Procédé de valorisation de produits de boulangerie, plus spécialement de restes de pain et de pain retourné

(30) Priorität: 02.08.1996 DE 19631180
(43) Veröffentlichungstag der Anmeldung: 04.02.1998
(73) Patentinhaber: Reimelt Henschel GmbH, 63322 Rödermark (DE); Müller-Brot GmbH, 85375 Neufahrn (DE)
(72) Erfinder: Meuser, Friedrich, Prof. Dr. Dr. e.h., 13465 Berlin (DE)
(74) Vertreter: Grünecker, Kinkeldey, Stockmair & Schwanhäusser Anwaltssozietät

(56) Entgegenhaltungen:
- EP-A- 0 229 979
- DE-A- 3 323 081
- DE-A- 3 402 778
- DE-C- 3 623 896
- MEUSER F: "DEVELOPMENT OF FERMENTATION TECHNOLOGY IN MODERN BREAD FACTORIES" CEREAL FOODS WORLD, AMERICAN ASSOCIATION OF CEREAL CHEMISTS, INC, US, Bd. 40, Nr. 3, 1. März 1995 (1995-03-01), Seiten 114-118,120-12, XP002056692
- DATABASE FSTA [Online] INTERNATIONAL FOOD INFORMATION SERVICE (IFIS), FRANFURT/MAIN, DE; Database accession no. 85-2-10-m0049 XP002263400 & KHLEBOPEKARNAYA I KONDITERSKAYA PROMYSHLENNOST', 1984,
- DATABASE FSTA [Online] INTERNATIONAL FOOD INFORMATION SERVICE (IFIS), FRANFURT/MAIN, DE; Database accession no. 88-1-01-m0054 XP002263401 & KHLEBOPEKARNAYA I KONDITERSKAYA PROMYSHLENNOST', 1984,

## Beschreibung

Die Erfindung betrifft ein Verfahren zur Verwertung von Backwaren, insbesondere von Rest- und Rückbrot und/oder in ihrer stofflichen Zusammensetzung ähnlichen Produkten als Ausgangsmaterial für die Backwarenherstellung, insbesondere von Broten aus Weizen- und Roggenmahlerzeugnissen, bei dem durch amylolytische und proteolytische Hydrolyse des Ausgangsmaterials ein Fermentationssubstrat hergestellt wird.

Meuser F. offenbart in "Development of Fermentation Technology in Modern Bread Factories" Cereal Foods World, American Association of Cereal Chemists, Inc., US, Bd. 40, Nr. 3, 1. März 1995 (1995-03-01), Seiten 114-118, 120-12, ein Verfahren zur Verwertung von Backwaren, insbesondere von Rest- und Rückbrot als Ausgangsmaterial für die Backwarenherstellung, **dadurch gekennzeichnet, daß** bei dem Verfahren entstehende Produkte (z.B. Backhefe, Flüssigsauer, Ethanol) voneinander getrennt gewonnen werden.

Bei dem in DE-PS 36 23 896 offenbarten Verfahren wird aus einem stärkehaltigen Ausgangsmaterial, das beispielsweise Rest- und/oder Altbackwaren sein können ein Kulturmedium für Bäckerhefe in Form eines Zuckersirups hergestellt. Dabei wird das stärkehaltige Ausgangsmaterial zunächst enzymatisch verflüssigt, danach enzymatisch verzuckert und durch Dekantation, Entfärbung, Filtration u.a. einer Raffination unterworfen. Der mit diesem Verfahren hergestellte Zuckersirup wird dann als Kultur- oder Nährmedium für die aerobe Herstellung von Bäckerhefe verwendet.

DE-PS 34 02 778 beschreibt ein Verfahren zum Herstellen eines Brotteigs unter Verwendung eines Brühstückanteils aus Restbrot und Getreideanteilen, der bezogen auf die Trockensubstanz der eingesetzten Getreidebestandteile 1 bis 50 Gew.-% beträgt und der vor dem Mischen mit den übrigen Teigbestandteilen einer enzymatischen Behandlung unterworfen wird. Zur Erhaltung einer saftigen Krume, eines verbesserten Frischhaltevermögens und eines brottypischen Geschmacks werden die Kohlenhydrate eines Teils des Brühstückanteils amylolytisch abgebaut, anschließend isomerisiert und mit anderen Teigbestandteilen zur Teigzubereitung gemischt.

EP-A-0 229 979 offenbart ein Verfahren zum enzymatischen Abbau von Restbrot mit Hilfe von Amylasen, Proteasen und Amyloglukosidasen zur Gewinnung eines Endproduktes, das als Süssungsmittel, Bräunungsmittel oder Geschmacksprecursor, gegebenenfalls auch als Konzentrat zum Einsatz kommt. Darüber hinaus kann das Endprodukt je nach Verwendungszweck zur Enzyminaktivierung erhitzt oder bei der Verwendung als Teigsäurungsmittel gesäuert werden.

All diese Substrate sind zur Herstellung von Backhefe geeignet. Dellweg, H. beschreibt in Biotechnologie, Grundlagen und Verfahren, VCH-Verlagsgesellschaft mbH, Weinheim, Germany, 1987 die Herstellung von Backhefen durch aerobe Fermentation von zuckerhaltigen Fermentationssubstraten, darunter hauptsächlich von Melasse, die bei der Gewinnung von Zucker (Sucrose) aus Zuckerrohr und Zuckerrüben als Nebenprodukt anfällt.

DE 33 20 206 A1 offenbart ein Verfahren und eine Vorrichtung zum Zerkleinern, Mischen, Homogenisieren und anschließenden Fermentieren von Brot und Brötchen zu Sauerteig. Dabei werden die Ausgangsprodukte während einer bestimmten Zeit einer umlaufenden, durch Zerkleinerungswerkzeuge geführten Bewegung und anschließender fermentativer Restzerkleinerung durch Zugabe von Wasser und Impfgut unterworfen. Der mit diesem Verfahren entstehende Sauerteig wird für die weitere Brotherstellung verwendet.

DE 33 23 081 A1 offenbart ein Verfahren und eine Vorrichtung zur Herstellung eines Sauerteigs für die Bereitung von Brot- und Backwaren unter Verwendung von Restbrot. Das Ausgangsprodukt wird einem ausgedehnten Fermentationsprozeß unterworfen. Der Sauerteig wird ebenfalls für die Bereitung von Brot- und Backwaren verwendet.

Meuser, F. beschreibt in Development of fermentation technology in modern bread factories. Cereal Foods World (40) 1995, 114-122 die Herstellung eines Flüssigferments, das in Rußland in Brotfabriken seit mehreren Jahrzehnten eingesetzt wird. Das Flüssigferment besteht aus einer milchsauren Flüssigkeit, in der Milchsäurebakterien aktiv sind und in der auf anaerobem Wege Hefe vermehrt wurde.

Aus Ministerstwo Chleboproduktow SSSR NPO "Chelebprom". Sbornik technologitscheskich instruziij dlja proiswodstwa chleba i chlebobulotschnyk isdelij Prejckurantisdat. Moskwa, SSSR, 1989 ist ein Verfahren bekannt, bei dem aus Malz und Wasser eine Maische hergestellt wird, deren Stärkeanteil enzymatisch mit Malzmehl oder amylolytisch wirkenden Enzymen aus Mikroorganismen zum Maltose oder Glucose abgebaut wird. Die Maische wird in der ersten Fermentationsstufe unter selektiven Verfahrensbedingungen durch-Milchsäurebildung mit Milchsäurebakterien gesäuert. Damit wird über die dabei erfolgende Absenkung des pH die Voraussetzung dafür geschaffen, daß in der Maische neben den dominant vorkommenden Milchsäurebakterien keine anderen Bakterien wachsen können. Die saure Maische ist deshalb stabil, ohne daß ergänzende Maßnahmen für den Erhalt ihres mikrobiologischen Zustands ergriffen werden müssen. In ihr werden in der zweiten Fermentationsstufe auf anaerobem Wege Hefezellen vermehrt. Durch die Anreicherung des milchsauren Fermentationssubstrats mit Hefezellen entsteht das Flüssigferment, das direkt zur Teigherstellung verwendet wird. Das Flüssigferment erfüllt aufgrund der in ihm enthaltenen aktiven Milchsäurebakterien und seines Milchsäuregehalts sowie der in ihm homogen verteilten Hefezellen zugleich die Funktion der Säuerung als auch des Triebs der Teige.

Dieses Verfahren ist zur Herstellung von Backhefe unwirtschaftlich, weil aus der über das Mehl oder ein vergleichbares anderes Fermentationsprodukt zur Verfügung stehende Maltose oder Glucose auf anaerobem Wege ungefähr sieben Mal mehr Hefe als auf dem anaerobem gewonnen werden kann. Es kommt hinzu, daß die Fermentationsprodukte Ethanol und Kohlendioxid verloren gehen, bzw. beim Fermentieren und Backen an die Umwelt abgegeben werden. Außerdem besitzt das Fermentationssystem zwar eine hohe Anpassung an die kontinuierliche Produktion eines bestimmten in großer Quantität mit Sauerteig herzustellenden Brottyps, es kann aber nicht für die flexible Produktion eines breiten Brotsortiments, dessen einzelne Brotsorten mit Hefe und/oder mit Sauerteig hergestellt werden, eingesetzt werden. Die Inflexibilität des Systems ergibt sich vor allem auch daraus, daß nicht auf spezielle Ansprüche der Fermentationszeit unterschiedlicher Teige reagiert werden kann, weil die. Hefekonzentration im Flüssigferment klein und praktisch konstant ist. Es kommt hinzu, daß der nicht-fermentierbare Feststoffgehalt des Substrats mit in die Rezeptur des Brotes überführt werden muß. Darin liegt eine zusätzliche Begrenzung der Verwendung des Flüssigferments für ein breites Brotsortiment begründet.

Es ist daher Aufgabe der vorliegenden Erfindung, ein Verfahren der eingangs genannten Art bereitzustellen, mit dem auf wirtschaftliche Weise und unter Berücksichtigung technischer Notwendigkeiten die Ausgangsstoffe bei einer diskontinuierlichen Brotproduktion zur Herstellung eines breiten Brotsortiments weiter verwendet werden können.

Die Lösung der Aufgabe sieht vor, daß bei dem Verfahren entstehende Produkte voneinander getrennt gewonnen werden und mindestens ein Produkt zur Herstellung von Backwaren weiterverwendet wird, wobei mit dem Fermentationssubstrat eine zweistufige Hefevermehrung unter aeroben und anaeroben Bedingungen durchgeführt und der vom Ethanol befreite Flüssigsauer nach der anaeroben Fermentation zur Verdünnung des Fermentationssubstrats der aeroben Fermentation verwendet wird und eine Rückkopplung der anaeroben Fermentation auf die aerobe Fermentation über die Wahl von Massenströmen durch beide Fermentationsstufen in Verbindung mit einer Verdünnung über einen Flüssigsauer erfolgt.

Die Vorbereitung des Rest- und Rückbrotes umfaßt zunächst die Kontrolle der hygienischen Unbedenklichkeit, insbesondere die Kontrolle des Mindesthaltbarkeitsdatums und, soweit erforderlich das Auspacken des verpackten Brotes. Danach wird das Rest- und Rückbrot mechanisch zerkleinert und mit Wasser in bekannter Weise vermischt. Die so entstehende Maische wird einer enzymatischen Hydrolyse unterworfen, wobei die Temperatur und pH-Optima der eingesetzten Enzyme zu beachten sind. Hochmolekulare Inhaltstoffe werden zu niedermolekularen Abbauprodukten hydrolisiert. Auf diese Weise entsteht nach Dekantation der nicht verflüssigbaren Feststoffe ein Fermentationssubstrat, das den Ansprüchen von Milchsäurebakterien und Hefen an Wachstum und Vermehrung genügt. Durch eine Fermentation mit Milchsäurebakterien wird das Fermentationssubstrat zunächst gesäuert und danach wird in ihm eine Hefekultur sowohl aerob als auch anaerob vermehrt. Die Hefe wird als Backhefe gewonnen und dient als essentieller Rezepturbestandteil mit funktionaler Wirkung für die Herstellung von Brot. Damit wird den Brotfabriken eine weitgehende Selbstversorgung mit diesem wertvollen Rohstoff in einem geschlossenen Stoffkreislauf ermöglicht. Die nach Destillation des bei anaeroben Fermentation gebildeten Ethanols verbleibenden saure Flüssigkeit wird als Flüssigsauer direkt, gegebenenfalls vollständig, wenigstens jedoch teilweise in den Brotherstellungsprozeß als Schüttwasser zur Teigsäuerung eingebracht. Die mit dem erfindungsgemäßen Verfahren durch Dekantation aus dem Hydrolysat gewonnenen Anteile an nicht verflüssigbaren Feststoffen erfüllen die Funktion von Ballaststoffen. Sie eignen sich besonders zur Verbesserung des Geschmacks und/oder des Nährwertes von Brot. Das bei der anaeroben Fermentation entstehende Ethanol und Kohlendioxid wird nach Destillation bzw. Verflüssigung genutzt. Das Ethanol wird, sofern sich kein höherwertiger Einsatz finden läßt, als Brennstoff verwendet. Das Kohlendioxid wird zum Kühlen (z.B. von Teig) und Verpacken verwendet.

Die voneinander getrennte Gewinnung der in dem erfindungsgemäßen Verfahren entstehenden Produkte stellt für die Brotfabriken eine wichtige Möglichkeit dar, das als Futtermittel nicht mehr absetzbare Rück- und Restbrot als Sekundärrohstoff auf wirtschaftliche Weise im Rahmen eines ganzheitlichen Konzepts der Herstellung und Vermarktung zu verwerten.

Damit die Trockenmasse des Rückbrots optimal zur Bildung von Stoffwechselprodukten und zur Hefemassebildung nutzbar gemacht wird, sieht die Erfindung vor, daß das Ausgangsmaterial einer amylolytischen und proteolytischen Hydrolyse unterworfen wird. Die Umsetzung der Kohlenhydrate im Brot, hauptsächlich der Stärke, in von Hefe veratembare und vergärbare Kohlenhydrate sowie des Proteins in von ihr resorbierbare N-Verbindungen erfährt ihre Begrenzung durch die Art und das Ausmaß der Hydrolyse, so daß davon auch die Zellmassebildung der Hefe beeinflußt wird. Als amylolytisch wirkende Enzyme werden eine Alphaamylase und eine Amyloglucosidase verwendet. Der proteolytische Abbau wird mit Hilfe einer Protease durchgeführt.

Das enzymatisch hydrolysierte Rückbrot wird zur Inaktivierung der Enzyme erhitzt und anschließend einer Fermentation mit Milchsäurebakterien unterworfen, die eine Absenkung des pH-Wertes auf 4,0 bewirken. Die Fermentation wird mit Milchsäurebakterien (Lactobacillus delbrückii) durchgeführt, das saure zuckerhaltige Hydrolysat wird als Fermentationssubstrat zur Hefevermehrung verwendet und die Hefevermehrung zweistufig unter aeroben und anaeroben Bedingungen durchgeführt. Diese Verfahrensschritte haben den Vorteil, daß das saure Hydrolysat optimal von der Hefe zur Bildung von Stoffwechselprodukten und Hefezellmasse genutzt werden kann. Dabei wird der vom Ethanol befreite Flüssigsauer zur Verdünnung des Fermentationssubstrats verwendet.

Zur Veranschaulichung dieser Erkenntnis sei darauf verwiesen, daß die Hefevermehrung auf aerobem Weg aus Mehl oder Rückbrot ihre Begrenzung durch den aus diesen Stoffen für die Bildung von Hefezellmasse zur Verfügung stellbaren Anteil an stickstoffhaltigen Verbindungen aus dem Protein findet. Diese ist jedoch selbst unter der Voraussetzung, er wäre unter den Prozeßbedingungen von den Hefen vollständig resorbierbar, deutlich kleiner als der für die aerobe Zellmassebildung anbietbare Kohlenhydratanteil. Wird beispielsweise von einem Weizenmehl ausgegangen, das bezogen auf seine Trockensubstanz einen Stärkegehalt von 78 % und ein Proteingehalt von 14 % (N x 5,7) besäße, so entstünden bei vollständiger enzymatischer Hydrolyse der Stärke zu Glucose aus 1.000,0 g Trockensubstanz aus Mehl 866,7 g Glucose, aus denen bei einer aeroben Hefebildung von 0,54 g Trockensubstanz aus 1,00 g Glucose 468,0 g Hefetrockensubstanz würden. Das wäre aber deshalb nicht möglich, weil für diese Hefetrockensubstanz, die einen Proteingehalt von 45 % besäße, 210,6 g resorbierbare stickstoffhaltige Verbindungen (N-Verbindungen) aus dem Protein im Mehl vorhanden sein müßten. Da tatsächlich aber nur 140,0 g Protein vorhanden wären, könnten ohne Zugabe einer anderen Stickstoffquelle in dem Fermentationsansatz maximal nur 311,1 g Trockensubstanz gebildet und entsprechend 576,1 Glucose veratmet werden. Es verblieben demzufolge 290,6 g Glucose, die nicht veratmet oder aber vergoren werden könnten. Da die Zellmassebildung bei der Vergärung von Glucose 7,2 Mal kleiner als bei der Veratmung ist, könnten aus den 290,6 g Glucose 21,8 g Hefetrockensubstanz gewonnen werden, wenn dafür 9,8 g resorbierbare N-Verbindungen zur Verfügung gestellt würden. Dafür wäre es erforderlich, die aerobe Fermentation zu begrenzen.

Aus diesen Überlegungen ergibt es sich, daß es bei Kombination einer aeroben mit einer anaeroben Fermentation von Glucose aus einem Hydrolysat aus Mehl oder Restbrot ein optimales Verhältnis zwischen beiden Fermentationen gibt, bei dem eine maximale Resorption der N-Verbindungen und eine entsprechende maximale Zellmassebildung an Hefe erfolgt. Die Resorption an N-Verbindungen bleibt dabei kleiner als es der vorhandenen Masse an Protein entspricht.

Diese Überlegungen gelten in gleicher Weise für die Verwendung von Brot oder Produkten vergleichbarer Zusammensetzung als Quelle für fermentierbare Kohlenstoff- und Stickstoffverbindungen.

Es hat sich als optimal erwiesen, daß mit dem in zwei Masseströme aufgeteilten sauren Hydrolysat die aerobe und anaerobe Hefevermehrung kontinuierlich aufeinander folgend durchgeführt werden. Dabei wird der aus dem im Unterlauf eines ersten Dekanters austretende Massestrom geteilt, und der aeroben und anaeroben Fermentationsstufe zugeführt. Dabei ist zu beachten, daß die Masseströme so zu lenken sind, daß die in der aeroben Stufe erforderliche hohe Verdünnung des Fermentationssubstrats zur Absenkung der Zuckerkonzentration auf die für die aerobe Fermentation zulässige Höhe möglich wird. Die Konzentration des Massestroms wird maximal auf die Zuckerkonzentration eingestellt, die in der aeroben Fermentation zur einer vollständigen Umsetzung des Zuckers zu Ethanol und Kohlendioxid führt. Dazu wird das mit Milchsäurebakterien gesäuerte Brothydrolysat, das bei einer Feststoffkonzentration von ca. 40 % eine Konzentration an Glucose von etwa 22 % besitzt mit einem Flüssigsauer verdünnt. Die Verdünnung des Massestroms der aeroben Stufe erfolgt auf gleiche Weise.

Die Erfindung sieht weiterhin vor, daß die Teilung des sauren Hydrolysats auf die Masseströme auf der Grundlage des Anteils der aus dem Proteingehalt des Ausgangsmaterials durch Proteolyse freigesetzten und von der Hefe resorbierbaren stickstoffhaltigen Verbindungen erfolgt. Die kleinste Zellmassebildung entsteht bei rein anaerober Fermentation. Dies ist zugleich mit der kleinsten Resorption an Stickstoff-Verbindungen und der größten Bildung an Ethanol verbunden. Dadurch kann die Zellmassebildung unter Erhalt der vollständigen Umsetzung des Kohlenhydratanteils erfolgen.

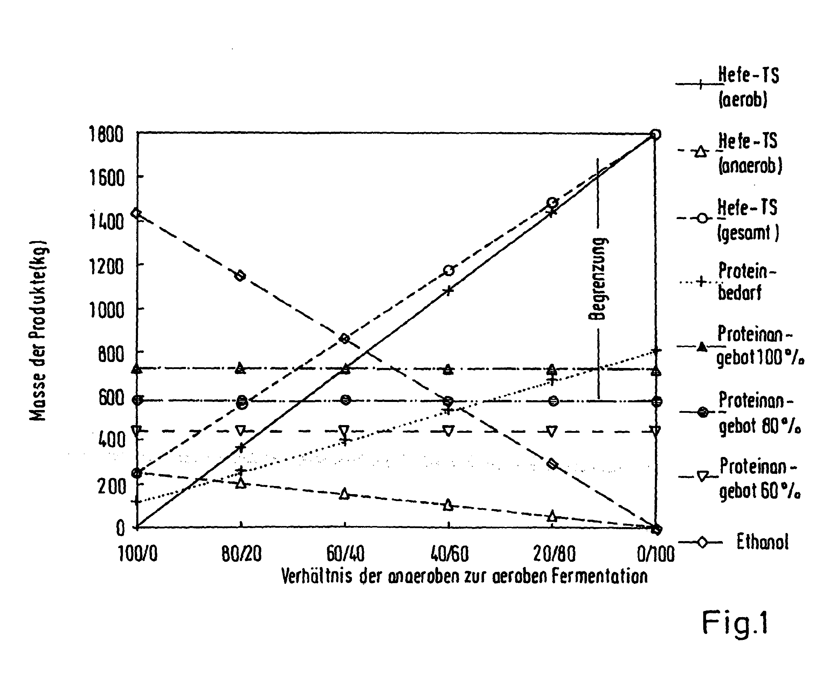

Dabei hat es sich als vorteilhaft erwiesen, daß das . Verhältnis zwischen aerober und anaerober Hefevermehrung zwischen 5 zu 95 und 60 zu 40 gewählt wird. Es hat sich dabei gezeigt, daß in gewissen Grenzen, die unter praktischen Bedingungen insbesondere durch den Anteil resorbierbarer N-Verbindungen im Substrat gesetzt werden für die Herstellung von Hefe und Ethanol beliebige Verhältnisse zwischen aerober und anaerober Fermentation eingestellt werden können. Zur Illustration dieser Möglichkeit ist ein theoretisches Beispiel in Fig. 1 dargestellt, das sich auf eine Brotfabrik bezieht, die eine bestimmte Rückbrotmenge nach diesem Verfahren verarbeiten könnte. In der Figur sind die Schnittpunkte zwischen den Kurven für den Proteinbedarf der Hefe und den Kurven für das angenommene Proteinangebot durch das Substrat äquivalent zu der maximalen Menge an Glucose, die aerob fermentiert werden könnte. Wäre beispielsweise das Verhältnis zwischen anaerober und aerober Fermentation der Glucose 55 zu 45, dann würden etwa 1.000 kg Hefetrockenmasse (≅ 4.000 kg Feuchthefe) und 720 kg Ethanol produziert.

Für die optimale Durchführung des erfindungsgemäßen Verfahrens hat sich ein Verhältnis zwischen aerober und anaerober Hefevermehrung von 25 zu 75 bewährt.

Gute Ergebnisse wurden mit dem erfindungsgemäßen Verfahren erzielt, wenn als Hefekultur Saccharomyces cerevisiae verwendet wurde. Mit diesem Hefestamm wird in der zweistufigen erfindungsgemäßen Hefevermehrung unter aeroben und anschließend unter anaeroben Bedingungen eine gute Ausbeute an Backhefe und Ethanol erzielt. Darüber hinaus muß erwähnt werden, daß bezogen auf den gleichen Feststoffgehalt die Triebkraft der mit dem erfindungsgemäßen Verfahren hergestellten Hefe im wesentlichen der einer konventionell hergestellten Backhefe entspricht. Mindestens erreicht sie jedoch 90 % davon. Damit können die Brotfabriken ihren Eigenbedarf an Backhefe als essentiellen Rohstoff bei der Brotherstellung durch Anwendung des erfindungsgemäßen Verfahrens decken. Das erfindungsgemäße Verfahren ermöglicht durch Verwertung aller gebildeten Produkte eine Wertschöpfung aus Rest- und Rückbrot, die auf dem üblichen Wege seiner Verwertung als Futtermittel oder Fermentationssubstrat nicht erreicht werden könnte.

Des weiteren ist vorgesehen, daß der während des Verfahrens anfallende Flüssigsauer zur Verdünnung des sauren Hydrolysats verwendet wird. Diese Maßnahme wurde bereits oben im Zusammenhang mit der Verdünnung der beiden Masseströme zur Reduzierung der Zuckerkonzentration erwähnt. Dabei wird der aus der aeroben Hefevermehrung stammende und nach einer Dekantation gewonnene Überstand zur Verdünnung des aerob zu fermentierenden Hydrolysatanteils rückgeführt. Das gleiche gilt für die anaerobe Hefevermehrung, wobei sich hier nach der Dekantation der Hefe eine Destillation zur Entfernung des Ethanols anschließt. Der von Ethanol befreite Flüssigsauer wird ebenfalls zur Verdünnung des aerob zu fermentierenden Hydrolysatanteils verwendet.

Darüber hinaus wird der im erfindungsgemäßen Verfahren anfallende Flüssigsauer anderweitig verwendet. Es bietet sich an, daß er zur direkten Säuerung von Teigen aus Weizen- und Roggenmehlen sowie von Teigen aus Mischungen von Weizen - und Roggenmehlen verwendet wird. Auch hier ergeben sich Kostenersparnisse, die sich im Rahmen einer rationellen und wirtschaftlichen Verfahrensweise bei der Brotherstellung bemerkbar machen. Im Rahmen der durchgeführten Versuche hat es sich auch herausgestellt, daß der im Verfahren anfallende Flüssigsauer im Sinne von Vorteigführungen zur indirekten Säuerung von Teigen aus Weizen- und Roggenmehlen und Mischungen aus Weizen- und Roggenmehlen eingesetzt werden kann. Es hat sich auch gezeigt, daß der im Verfahren anfallende Flüssigsauer unter Ausnutzung seiner aktiven Mikroorganismenflora zu Sauerteigführung eingesetzt werden kann.

Die Teilung des Massestroms an Flüssigsauer in den im Kreislauf zu führenden Anteil und den aus dem Verfahrensablauf zu entnehmenden erfolgt so, daß die aerobe Fermentation bei minimaler Frischwasserzufuhr stabil aufrechterhalten bleibt. Die aufgezeigten vielfältigen Möglichkeiten der Weiterverarbeitung des bei dem erfindungsgemäßen Verfahren anfallenden Flüssigsauers zeigen, wie dieses Produkt einer weitestgehenden vollständigen Nutzung zugeführt werden kann. Damit ist auch für dieses Verfahrensprodukt das Ziel erreicht, aus dem Sekundärrohstoff Rest- und Rückbrot ein für die Brotherstellung wertvolles Zwischenprodukt zu gewinnen.

Dies gilt auch für die Ballaststoffe. Diese können bei der Herstellung von beliebigen Backwaren, insbesondere in Rezepturen für ballaststoffreiche Backwaren eingesetzt werden. Dieses Produkt wird durch zweifache Dekantation des sauren Hydrolysats gewonnen. Auf diese Weise werden die Ballaststoffe durch Verdrängen gelöster Stoffe aufkonzentriert.

Zur Konservierung der Ballaststoffe hat es sich bewährt, daß diese durch Trocknung und Mahlung oder durch Mahltrocknung in ein mehlartiges Trockenprodukt überführt wird. Trocknung und Mahlung der Ballaststoffe verhindern deren Verderb.

Es hat sich außerdem bewährt, daß das mehlartige Trokkenprodukt zur Herausbildung seiner Eigenschaften als Geschmacksstoffträger durch Anwendung thermischer Verfahren, wie Rösten und Extrudieren weiterbehandelt wird. Der Einsatz dieser Produkte geht über den Bereich der Brotherstellung hinaus und ist auf vielfältigen Gebieten der gesamten Lebensmittelherstellung möglich und von Bedeutung.

Vorzugsweise sieht die Erfindung vor, daß das bei der Durchführung des Verfahrens anfallende Ethanol durch Destillation gewonnen und innerbetrieblich als Brennstoff weiterverwendet wird. Das bei der Durchführung des Verfahrens anfallende Kohlendioxid wird verflüssigt und als Kühlmittel weiterverwendet.

Durch die getrennte Gewinnung der bei dem erfindungsgemäßen Verfahren entstehenden Produkte wird im Hinblick auf deren Einsatz zur Brotherstellung eine hohe Flexibilität in der Anpassung an die Besonderheiten der unterschiedlichen Rezepturen für Brote erzielt. Das in einer Brotfabrik anfallende Rück- und Restbrot wird dadurch im Sinne einer Kreislaufwirtschaft im Herstellungsprozesses für Brot wiederverwertet, wobei es beim Durchlaufen des erfindungsgemäßen Verfahrens in Form der dabei entstehenden Produkte in veränderter Form einer neuen Funktion zugeführt wird. Je nach Zusammensetzung der einzelnen Brotsorten werden die verschiedenen Produkte in quantitativ genau ermittelten Mengen den unterschiedlichen Teigmischungen zugesetzt.

Dabei hat es sich bewährt, daß das Verfahren folgende Verfahrensschritte aufweist:
Vorbereitung des Ausgangsmaterials
Herstellung eines Fermentationssubstrats durch enzymatische Hydrolyse des Ausgangsmaterials Fermentation des Hydrolysats mit säurebildenden Bakterien
und mindestens einen der folgenden Verfahrensschritte
Gewinnung von Backhefe
Gewinnung eines Flüssigsauers
Gewinnung von Ballaststoffen
Gewinnung von Ethanol
Gewinnung von Kohlendioxid.

Die Erfindung wird im folgenden anhand einer bevorzugten Ausgestaltung des Verfahrens in Verbindung mit der Zeichnung erläutert. Hierin zeigen:
- Fig. 1: eine graphische Darstellung der Herstellung von Hefe und Ethanol in Abhängigkeit vom Verhältnis der anaeroben und aeroben Fermentation von Brot- sirup und
- Fig. 2: ein vereinfachtes Fließschema für die Herstel- lung von Backhefe, Flüssigsauer, Ethanol, Koh- lendioxid und Ballaststoffen aus Rückbrot.

Fig. 1 zeigt, daß in gewissen Grenzen, die unter praktischen Bedingungen insbesondere durch den Anteil resorbierbarer N-Verbindungen im Substrat gesetzt werden für die Herstellung von Hefe und Ethanol beliebige Verhältnisse zwischen aerober und anaerober Fermentation eingestellt werden können. Das hier dargestellte Beispiel bezieht sich auf eine Brotfabrik, die eine bestimmte Rückbrotmenge nach dem erfindungsgemäßen Verfahren verarbeiten könnte. In der Figur sind die Schnittpunkte zwischen den Kurven für den Proteinbedarf der Hefe und den Kurven für das angenommene Proteinangebot durch das Substrat äquivalent zu der maximalen Menge an Glucose, die aerob fermentiert werden könnte. Wäre beispielsweise das Verhältnis zwischen anaerober und aerober Fermentation der Glucose 55 zu 45, dann würden etwa 1.000 kg Hefetrockenmasse (entspricht ungefähr 4.000 kg Feuchthefe) und 720 kg Ethanol produziert.

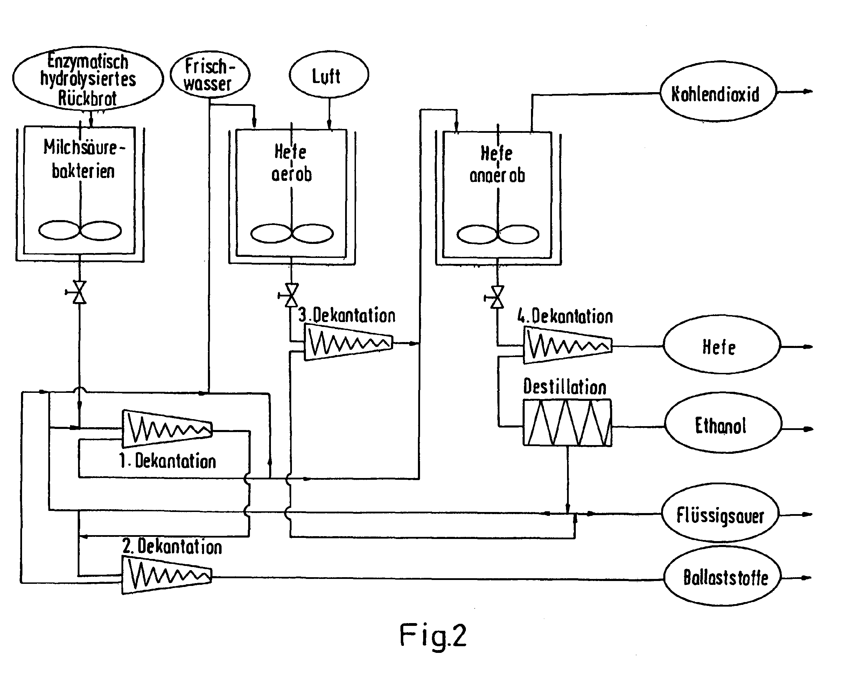

In Verbindung mit Fig. 2 wird ein bevorzugtes Ausführungsbeispiel beschrieben.

In einem mantelbeheizten Rührwerksbehälter werden in bekannter Weise täglich 4.000 kg Rückbrot mit 2.000 1 Wasser angerührt. Die Trockenmasse des Rückbrots beträgt 2.400 kg. Davon sind 1.680 kg Stärke und 288 kg Protein (N x 5,7). Der Ansatz wird auf einen pH von 5,2 eingestellt und mit einer α-Amylase (z.B. Optiamyl L 840, Fa. Solvey Enzymes) versetzt, die ein Temperaturoptimum von 70° C aufweist. Der Ansatz wird auf 70° C erwärmt und 3 h bei dieser Temperatur gehalten, um ihn zu verflüssigen. Danach wird der verflüssigte Ansatz auf 60°C abgekühlt und mit Amyloglucosidase (z.B. Glucoamylase L 200, Fa. Solvey, Enzymes) versetzt. Der Ansatz wird bei pH 5,2 über 18 h verzuckert. Dabei werden mindestens 80 % der Stärke zu Glucose abgebaut, so daß im Ansatz bezogen auf das Beispiel bei 80 iger% Stärkehydrolyse 1.493 kg Glucose vorkommen.

Nach der Verzuckerung wird der Ansatz auf 45° C abgekühlt und zum Abbau seines Proteinanteils in lösliche niedermolekulare Peptide und Aminosäuren mit einer Protease (z.B. Corolase PN-L, Fa. Röhm) versetzt, die als Endo- und Exopeptidase wirkt. Das Enzym wird bei pH 5,2 über 21 h einwirken gelassen. In dieser Zeit werden mindestens 70 % des Proteins in lösliche N-Substanzen abgebaut. Danach wird der Ansatz zur Inaktivierung der Enzyme auf 100° C erwärmt und 30 min bei dieser Temperatur gehalten.

Anschließend wird der Ansatz auf 50° C abgekühlt und mit Lactobacillus delbrückii versäuert. Dazu wird der Ansatz auf sein Volumen bezogen mit 10 % eines vorausgegangenen versäuerten Ansatzes versetzt. Die Ansäuerung mit der aktiven Milchsäurebakterienflora führt in 24 h zu einer Absenkung des pH auf 4,0. Der Säuregrad in dem Ansatz beträgt bei diesem pH ca. 12-14° S, so daß ca. 5 % der im Ansatz vorhandenen Glucose zu Milchsäure umgesetzt werden. Im Ansatz sind bezogen auf das Beispiel dann noch 1.418 kg Glucose vorhanden, die aerob und anaerob fermentiert werden.

Die aerobe und anaerobe Fermentation erfolgt kontinuierlich, wobei sich alle nachfolgenden Angaben auf das vorausgehende Beispiel beziehen. Die Fermentation erfolgt, wie in der Abbildung 2 dargestellt, in zwei Fermentern bei etwa 30° C. Verweilzeit und Volumenströme durch die Fermenter ergeben sich aus der Generationszeit der Hefe unter den jeweiligen Fermentationsbedingungen, womit auch die Volumina der Fermenter festgelegt sind. In üblicher Weise werden der anaerobe Fermenter mit einer Konzentration an Glucose im Substrat von etwa 20 g Glucose pro Liter und der anaerobe Fermenter mit etwa 125 g Glucose pro Liter gefahren. Die Hefekonzentration beträgt in beiden Fermentern hierbei etwa 40 g/l. In der Abbildung 2 sind alle Zwischenlager- und Pufferbehälter sowie Pumpen nicht enthalten. Diesbezüglich ist insbesondere zu erwähnen, daß im Verfahrensablauf vorgesehen sein kann, daß der Verfahrensweg bis zur Bereitstellung des sauren, verdünnten und dekantierten Fermentationsansatzes diskontinuierlich erfolgen kann.

Aus dem im täglichen Rhythmus diskontinuierlich hergestellten Fermentationsansatz ergibt sich für die kontinuierliche Fermentation ein Massestrom aus versäuertem Ansatz von 250 kg/h. Dieser wird durch Zugabe von 144 kg Flüssigsauer auf eine Glucosekonzentration von 15 % eingestellt. Der Massestrom vergrößert sich dadurch am Einlauf in die erste Dekantation, mit dem die unlöslichen Feststoffe (Ballaststoffe) abgeschieden werden, auf 394 kg/h. Dieser Massestrom enthält 59,1 kg/h Glucose. Bezogen auf den Glucosegehalt im Fermentationssubstrat wird der Massestrom im Verhältnis 25:75 auf die beiden Fermentationsstufen aufgeteilt, so daß theoretisch 14,8 kg Glucose/h in die aerobe und 44,3 kg Glucose/h in die anaerobe Stufe gelangen. Da jedoch die Auswaschung der Fraktion an Ballaststoffen vor der zweiten Dekantation mit einem gewissen Übergang sowohl an Glucose als auch an gelöstem Protein in diese verbunden ist, der ca. 5 % der Masse der Glucose und des Proteins beträgt, sind die tatsächlichen Masseströme an Glucose nur 14,1 kg/h (aerob) und 42,1 kg/h (anaerob) groß. Gleiches gilt für den Massestrom an N-Verbindungen, der theoretisch 12,0 kg/h, praktisch aber nur 11,4 kg/h groß ist.

Im Fermentationsablauf entstehen in der aeroben Fermentationsstufe bezogen auf die Trockenmasse 7,6 kg Hefe und in der anaeroben 3,2 kg Hefe. Dabei wird das Angebot an N-Verbindungen zu 40-45% von der Hefe aufgenommen und die Hefetrockenmasse hat einen Proteingehalt (N x 6,25) von 40-45%. Außerdem werden 19,6 kg Ethanol/h, 18,5 kg Kohlendioxid/h und zwischen 20 bis 24 kg/h Trockenmasse an Ballaststoffen gewonnen. Die Ausbeute an Ethanol und Kohlendioxid bezieht sich dabei auf einen Wirkungsgrad der Destillation bzw. der Verflüssigung von 90 % des in dem Massestrom der anaeroben Fermentationsstufe enthaltenen Ethanols bzw. anfallenden Kohlendioxids. Daneben werden ca. 220-240 kg/h Flüssigsauer mit einem Säuregrad von 8-10° S erhalten. Diese Masse an Flüssigsauer fällt im Fließgleichgewicht der Fermentation an, wenn die Verdünnung des Massestroms der ersten Fermentationsstufe mit den Abläufen aus der ersten und zweiten Stufe ohne Frischwasserzugabe erfolgt. Es ist dabei die Masseumwandlung von Glucose und Protein in die Endprodukte berücksichtigt. Außerdem ist der Masseaustrag berücksichtigt, der über die Fruchtmasse der Hefe und der Ballaststoffe erfolgt.

Zusammenfassend ist festzustellen, daß Rückbrot und diesem aus der Sicht des Handels und der Inhaltsstoffzusammensetzung vergleichbaren Backwaren durch enzymatische und fermentative Aufarbeitung im Sinne einer Kreislaufwirtschaft des Einsatzes der dabei entstehenden Roh- und Hilfsstoffe zur Herstellung von Brot und anderen Backwaren eingesetzt werden kann. Damit wird Rückbrot über die Verfahrensstufen der Herstellung von Brot, beginnend vom Teigbereiten über das Backen und Verpacken, einer weitgehend vollständigen Nutzung zugeführt. Der besondere Vorteil besteht dabei darin, daß die Überführung des Rückbrots in für die Brotherstellung essentielle Rohstoffe, darunter vor allem die Hefe, mit einer Wertschöpfung verbunden ist, die auf dem üblichen Wege seiner Verwertung als Futtermittel oder Fermentationssubstrat nicht erreicht werden kann. Für die Anwendung der Erfindung ergibt sich ein weiterer Vorteil dadurch, daß der dafür erforderliche energetische Aufwand durch Nutzung der Abwärme der Backöfen klein gehalten werden kann. Schließlich ist zu erwähnen, daß die Anwendung des Verfahrens eine umweltschonende Maßnahme darstellt, weil sie dazu beiträgt, die energetische Nutzung der für die Backwarenherstellung notwendigen Roh- und Hilfsstoffe sowohl wirtschaftlich als auch ernährungsphysiologisch zu erhöhen.

## Patentansprüche

1. Verfahren zur Verwertung von Backwaren, insbesondere von Rest- und Rückbrot und/oder in ihrer stofflichen Zusammensetzung ähnlichen Produkten als Ausgangsmaterial für die Backwarenherstellung, insbesondere von Broten aus Weizen- und Roggenmahlerzeugnissen, bei dem durch amylolytische und proteolytische Hydrolyse des Ausgangsmaterials ein Fermentationssubstrat hergestellt wird, **dadurch gekennzeichnet, daß** bei dem Verfahren entstehende Produkte voneinander getrennt gewonnen werden und mindestens ein Produkt zur Herstellung von Backwaren verwendet wird, wobei mit dem Fermentationssubstrat eine zweistufige Hefevermehrung unter aeroben und anaeroben Bedingungen durchgeführt und der vom Ethanol befreite Flüssigsauer nach der anaeroben Fermentation zur Verdünnung des Fermentationssubstrats der aeroben Fermentation verwendet wird und eine Rückkopplung der anaeroben Fermentation auf die aerobe Fermentation über die Wahl von Massenströmen durch beide Fermentationsstufen in Verbindung mit einer Verdünnung über einen Flüssigsauer erfolgt.

2. Verfahren nach Anspruch 1, **dadurch gekennzeichnet, daß** mit dem in zwei Masseströmen aufgeteilten sauren Hydrolysat die aerobe und anaerobe Hefevermehrung kontinuierlich aufeinander folgend durchgeführt werden.

3. Verfahren nach Anspruch 2, **dadurch gekennzeichnet, daß** die Teilung des sauren Hydrolysats auf die Masseströme auf der Grundlage des Anteils der aus dem Proteingehalt des Ausgangsmaterials durch Proteolyse freigesetzten und von der Hefe resorbierbaren stickstoffhaltigen Verbindungen erfolgt.

4. Verfahren nach einem der Ansprüche 1 bis 3, **dadurch gekennzeichnet, daß** das Verhältnis zwischen aerober und anaerober Hefevermehrung zwischen 5 zu 95 und 60 zu 40 gewählt wird.

5. Verfahren nach einem der Ansprüche 1 bis 4, **dadurch gekennzeichnet, daß** das Verhältnis zwischen aerober und anaerober Hefevermehrung von 25 zu 75 gewählt wird.

6. Verfahren nach einem der Ansprüche 1 bis 5, **dadurch gekennzeichnet, daß** als Hefekultur Saccharomyces cerevisiae verwendet wird.

7. Verfahren nach einem der Ansprüche 1 bis 6, **dadurch gekennzeichnet, daß** der wahrend des Verfahrens anfallende Flüssigsauer zur Verdünnung des sauren Hydrolysats verwendet wird.

8. Verfahren nach einem der Ansprüche 1 bis 7, **dadurch gekennzeichnet, daß** die Verdünnung des Massestroms an saurem Hydrolysat im Fließgleichgewicht der kontinuierlichen aeroben und anaeroben Fermentation ohne Frischwasserzuführung ausschließlich durch Rückführung des von der Hefe und im Falle der anaeroben Hefevermehrung zusätzlich des vom Ethanol befreiten Flüssigsauers erfolgt.

9. Verfahren nach einem der Ansprüche 1 bis 8, **dadurch gekennzeichnet, daß** der im Verfahren anfallende Flüssigsauer zur direkten Säuerung von Teigen aus Weizen- und Roggenmehlen sowie von Teigen aus Mischungen von Weizen- und Roggenmehlen verwendet wird.

10. Verfahren nach einem der Ansprüche 1 bis 9, **dadurch gekennzeichnet, daß** der im Verfahren anfallende Flüssigsauer im Sinne von Vorteigführungen zur indirekten Säuerung von Teigen aus Weizen- und Roggenmehlen und Mischungen aus Weizen- und Roggenmehlen eingesetzt wird.

11. Verfahren nach einem der Ansprüche 1 bis 10, **dadurch gekennzeichnet, daß** der im Verfahren anfallende Flüssigsauer unter Ausnutzung seiner aktiven Mikroorganismenflora zu Sauerteigführung eingesetzt wird.

12. Verfahren nach einem der Ansprüche 1 bis 11, **dadurch gekennzeichnet, daß** die im Verfahren anfallenden Ballaststoffen für die Herstellung beliebiger Backwaren, insbesondere für ballaststoffreiche Backwaren eingesetzt wird.

13. Verfahren nach einem der Ansprüche 1 bis 12, **dadurch gekennzeichnet, daß** die Ballaststoffe durch zweifache Dekantation des sauren Hydrolysats gewonnen werden.

14. Verfahren nach einem der Ansprüche 1 bis 13, **dadurch gekennzeichnet, daß** die Ballaststoffe durch Trocknung und Mahlung in ein mehlartiges Trockenprodukt überführt werden.

15. Verfahren nach einem der Ansprüche 1 bis 14, **dadurch gekennzeichnet, daß** die Ballaststoffe durch Mahltrocknung in ein mehlartiges Trockenprodukt überführt werden.

16. Verfahren nach einem der Ansprüche 14 oder 15, **dadurch gekennzeichnet, daß** aus dem mehlartigen Trokkenprodukt durch Anwendung thermischer Verfahren, insbesondere Rösten und Extrudieren, ein Geschmackstoffträger gebildet wird.

17. Verfahren nach einem der Ansprüche 1 bis 16, **dadurch gekennzeichnet, daß** das bei der Durchführung des Verfahrens anfallende Ethanol durch Destillation gewonnen und innerbetrieblich als Brennstoff weiterverwendet wird.

18. Verfahren nach einem der Ansprüche 1 bis 17, **dadurch gekennzeichnet, daß** das bei der Durchführung des Verfahrens anfallende Kohlendioxid verflüssigt und als Kühlmittel weiterverwendet wird.

19. Verfahren nach einem der Ansprüche 1 bis 18, **dadurch gekennzeichnet, daß** das Verfahren folgende Verfahrensschritte aufweist:
Vorbereitung des Ausgangsmaterials Herstellung eines Fermentationssubstrats durch enzymatische Hydrolyse des Ausgangsmaterials Fermentation des Hydrolysats mit säurebildenden Bakterien
und mindestens einen der folgenden Verfahrensschritte Gewinnung von Backhefe
Gewinnung eines Flüssigsauers
Gewinnung von Ballaststoffen
Gewinnung von Ethanol
Gewinnung von Kohlendioxid.

## Claims

1. A process for utilising baked goods, in particular surplus and stale bread and/or products made from similar ingredients as a starting material for the production of baked goods, in particular of breads made of milled wheat and rye products, wherein a fermentation substrate is produced by amylolytic and proteolytic hydrolysis of the starting material, **characterised in that** products arising from the process are obtained separately from one another and at least one product is used for the production of baked goods, with the fermentation substrate a two-stage yeast augmentation being implemented under aerobic and anaerobic conditions, and the liquid acid released from the ethanol being used after the anaerobic fermentation in order to thin the fermentation substrate of the aerobic fermentation, and feedback of the anaerobic fermentation to the aerobic fermentation being implemented by the choice of mass flows through both fermentation stages in association with thinning by means of a liquid acid.

2. The process according to Claim 1, **characterised in that** with the acid hydrolysate divided into two mass flows the aerobic and anaerobic yeast augmentations are implemented continuously one following the other.

3. The process according to Claim 2, **characterised in that** the division of the acid hydrolysate onto the mass flows is implemented on the basis of the portion of the nitrogenous compounds released from the protein content of the starting material by proteolysis and absorbable by the yeast.

4. The process according to any of Claims 1 to 3, **characterised in that** the ratio between aerobic and anaerobic yeast augmentation is chosen to be between 5 to 95 and 60 to 40.

5. The process according to any of Claims 1 to 4, **characterised in that** the ratio between aerobic and anaerobic yeast augmentation is chosen to be from 25 to 75.

6. The process according to any of Claims 1 to 5, **characterised in that** Saccharomyces cerevisiae is used as the yeast culture.

7. The process according to any of Claims 1 to 6, **characterised in that** the liquid acid arising during the process is used in order to thin the acid hydrolysate.

8. The process according to any of Claims 1 to 7, **characterised in that** the thinning of the mass flow of acid hydrolysate in the flux balance of the continuous aerobic and anaerobic fermentation takes place without the introduction of fresh water and exclusively by recycling the liquid acid released from the yeast and in the case of the anaerobic yeast augmentation additionally from the ethanol.

9. The process according to any of Claims 1 to 8, **characterised in that** the liquid acid arising during the process is used for the direct acidification of doughs made of wheat and rye flours and doughs made of mixtures of wheat and rye flours.

10. The process according to any of Claims 1 to 9, **characterised in that** the liquid acid arising during the process is used within the framework of pre-dough preparation for the indirect acidification of doughs made of wheat and rye flours and mixtures of wheat and rye flours.

11. The process according to any of Claims 1 to 10, **characterised in that** the liquid acid arising during the process is used utilising its active microorganism flora for the preparation of sour dough.

12. The process according to any of Claims 1 to 11, **characterised in that** the fibres arising during the process are used for the production of any baked goods, in particular for baked goods rich in fibres.

13. The process according to any of Claims 1 to 12, **characterised in that** the fibres are obtained by dual decantation of the acid hydrolysate.

14. The process according to any of Claims 1 to 13, **characterised in that** the fibres are converted into a flour-type dry product by drying and grinding.

15. The process according to any of Claims 1 to 14, **characterised in that** the fibres are converted into a flour-type dry product by grind drying.

16. The process according to either of Claims 14 or 15, **characterised in that** a flavour additive carrier is formed from the flour-type dry product by using a thermal process, in particular roasting and extruding.

17. The process according to any of Claims 1 to 16, **characterised in that** ethanol arising during implementation of the method is obtained by distillation and continues to be used in-plant as a fuel.

18. The process according to any of Claims 1 to 17, **characterised in that** the carbon dioxide arising during implementation of the process is liquefied and continues to be used as a cooling agent.

19. The process according to any of Claims 1 to 18, **characterised in that** the process has the following procedural steps:
preparation of the starting material
production of a fermentation substrate by enzymatic hydrolysis of the starting material
fermentation of the hydrolysate with acid-forming bacteria and at least one of the following procedural steps production of baker's yeast production of a liquid acid production of fibres production of ethanol production of carbon dioxide.

## Revendications

1. Procédé pour utiliser des produits de boulangerie, en particulier des restes de pain et du vieux pain et/ou des produits analogues dans leur composition matérielle, comme matière première pour la fabrication de produits de boulangerie, en particulier de pains à base de produits de froment et de seigle broyés, selon lequel un substrat de fermentation est fermé par hydrolyse amylolytique et protéolytique de la matière première, **caractérisé en ce que** des produits obtenus lors du procédé sont récupérés séparément et au moins un produit est utilisé pour fabriquer des produits de boulangerie, étant précisé qu'avec le substrat de fermentation une propagation de levure en deux étapes est réalisée dans des conditions aérobies et anaérobies, que le liquide acide séparé de l'éthanol est utilisé après la fermentation anaérobie pour diluer le substrat de fermentation de la fermentation aérobie, et qu'une rétroaction de la fermentation anaérobie sur la fermentation aérobie a lieu en choisissant des flux massiques dans les deux étapes de fermentation en liaison avec une dilution par un liquide acide.

2. Procédé selon la revendication 1, **caractérisé en ce que** les propagations de levure aérobie et anaérobie sont réalisées de manière successive et continue avec l'hydrolysat acide divisé en deux flux massiques.

3. Procédé selon la revendication 2, **caractérisé en ce que** la division de l'hydrolysat acide en flux massiques s'effectue sur la base de la proportion des composés azotés pouvant être résorbés par la levure et libérés par protéolyse à partir du contenu protéique de la matière première.

4. Procédé selon l'une des revendications 1 à 3, **caractérisé en ce que** le rapport entre la propagation de levure aérobie et la propagation de levure anaérobie est choisi entre 5 à 95 et 60 à 40.

5. Procédé selon l'une des revendications 1 à 4, **caractérisé en ce que** le rapport entre la propagation de levure aérobie et la propagation de levure anaérobie est choisi égal à 25-75.

6. Procédé selon l'une des revendications 1 à 5, **caractérisé en ce que** Saccharomyces cerevisiae est utilisé comme culture de levure.

7. Procédé selon l'une des revendications 1 à 6, **caractérisé en ce que** le liquide acide produit lors du procédé est utilisée pour diluer l'hydrolysat acide.

8. Procédé selon l'une des revendications 1 à 7, **caractérisé en ce que** la dilution du flux massique de l'hydrolysat acide s'effectue en équilibre d'écoulement de la fermentation aérobie et de la fermentation anaérobie continue sans addition d'eau fraîche, exclusivement par recirculation du liquide acide libéré par la levure et, en supplément, du liquide acide séparé de l'éthanol dans le cas de la propagation de levure anaérobie.

9. Procédé selon l'une des revendications 1 à 8, **caractérisé en ce que** le liquide acide produit lors du procédé est utilisé pour une acidification directe des pâtes constituées de farines de froment et de seigle ainsi que des pâtes constituées de mélanges de farines de froment et de seigle.

10. Procédé selon l'une des revendications 1 à 9, **caractérisé en ce que** le liquide acide produit lors du procédé est utilisé dans le sens de la préparation d'une pré-pâte pour une acidification indirecte des pâtes constituées de farines de froment et de seigle et des mélanges de farines de froment et de seigle.

11. Procédé selon l'une des revendications 1 à 10, **caractérisé en ce que** le liquide acide produit lors du procédé est utilisé en exploitant sa flore de micro-organismes active pour la préparation du levain.

12. Procédé selon l'une des revendications 1 à 11, **caractérisé en ce que** les fibres produites lors du procédé sont utilisées pour fabriquer des produits de boulangerie quelconques, en particulier des produits de boulangerie riches en fibres.

13. Procédé selon l'une des revendications 1 à 12, **caractérisé en ce que** les fibres sont obtenues par double décantation de l'hydrolysat acide.

14. Procédé selon l'une des revendications 1 à 13, **caractérisé en ce que** les fibres sont transférées par séchage et broyage dans un produit sec farinacé.

15. Procédé selon l'une des revendications 1 à 14, **caractérisé en ce que** les fibres sont transférées par séchage-broyage dans un produit sec farinacé.

16. Procédé selon l'une des revendications 14 et 15, **caractérisé en ce qu'**un agent aromatisant est formé à partir du produit sec farinacé en appliquant des procédés thermiques, en particulier un grillage et une extrusion.

17. Procédé selon l'une des revendications 1 à 16, **caractérisé en ce que** l'éthanol produit lors de la mise en oeuvre du procédé est récupéré par distillation et réutilisé en interne comme combustible.

18. Procédé selon l'une des revendications 1 à 17, **caractérisé en ce que** le dioxyde de carbone produit lors de la mise en oeuvre du procédé est liquéfié et réutilisé comme agent de refroidissement.

19. Procédé selon l'une des revendications 1 à 18, **caractérisé en ce qu'**il comprend les étapes de procédé suivantes de :
préparation de la matière première
fabrication d'un substrat de fermentation par hydrolyse enzymatique de la matière première
fermentation de l'hydrolysat avec des bactéries formant un acide
et au moins une des étapes de procédé suivantes de :
récupération de levure de boulanger
récupération d'un liquide acide
récupération de fibres
récupération d'éthanol
récupération de dioxyde de carbone.
